# EUROPÄISCHE PATENTSCHRIFT

(11) **EP 3 460 410 B1**
(45) Veröffentlichungstag und Bekanntmachung des Hinweises auf die Patenterteilung: **28.10.2020**
(21) Anmeldenummer: 18180685.2
(22) Anmeldetag: 29.06.2018
(51) Int. Cl.: G01D 5/244

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET PROCÉDÉ DE FONCTIONNEMENT D'UN DISPOSITIF DE MESURE DE POSITION

(30) Priorität: 20.09.2017 DE 102017216666
(43) Veröffentlichungstag der Anmeldung: 27.03.2019
(73) Patentinhaber: Dr. Johannes Heidenhain GmbH, 83301 Traunreut (DE)
(72) Erfinder: JOACHIMSTHALER, Ingo, 83278 Traunstein (DE); LENZ, Sebastian, 84518 Garching (DE); GEISLER, Thomas, 83362 Surberg (DE); SOIER, Johannes, 84431 Heldenstein (DE)

(56) Entgegenhaltungen:
- EP-A1- 2 960 737
- EP-A2- 2 375 221
- DE-A1- 19 539 633
- US-B2- 8 135 977
- US-B2- 8 620 619

## Beschreibung

### BEZEICHNUNG DER ERFINDUNG

Positionsmesseinrichtung und Verfahren zum Betreiben einer Positionsmesseinrichtung

### GEBIET DER TECHNIK

Die vorliegende Erfindung betrifft eine Positionsmesseinrichtung nach Anspruch 1, sowie ein Verfahren zum Betreiben einer Positionsmesseinrichtung nach Anspruch 11. Insbesondere betrifft die Erfindung die Auswertung von zeitlich veränderlichen Messsignalen von Sensoren im Frequenzbereich.

### STAND DER TECHNIK

Positionsmesseinrichtungen werden in der Automatisierungstechnik und insbesondere bei Werkzeugmaschinen dazu eingesetzt, Positionen, bzw. Positionsänderungen von beweglichen Teilen zu messen. So messen Drehgeber oder Winkelmessgeräte rotatorische Bewegungen, beispielsweise von sich drehenden Wellen. Längenmessgeräte dagegen messen lineare Verschiebungen zueinander beweglich angeordneter Maschinenteile.

Grundsätzlich unterscheidet man inkremental und absolut messende Positionsmesseinrichtungen, wobei verschiedene physikalische Messprinzipien zur Anwendung kommen, beispielsweise optische, magnetische, induktive oder kapazitive.

Inkremental messende Positionsmesseinrichtungen erzeugen Positionssignale durch Abtastung einer Inkrementalteilungsspur, die auf einem Teilungsträger angeordnet ist. Eine Inkrementalteilungsspur weist in einer Messrichtung regelmäßig angeordnete Teilungselemente auf, beim optischen Abtastprinzip beispielsweise eine Abfolge von lichtdurchlässigen und lichtundurchlässigen Teilungsstrichen. Diese Art der Messung ist Prinzip bedingt relativ, da die Abtastsignale der einzelnen Teilungsperioden nicht unterscheidbar sind. Die Positionsmessung erfolgt durch Zählen von Signalperioden, bzw. Bruchteilen von Signalperioden. Um einen absoluten Bezugspunkt zu schaffen, ist meist eine weitere Teilungsspur vorgesehen, die ein Referenzmuster aufweist, durch dessen Abtastung an einer definierten Position ein sog. Referenzimpuls erzeugt wird, der einen Bezugspunkt für die Positionsmessung schafft.

Bei absolut messenden Positionsmesseinrichtungen weist die Teilungsspur eine absolute Codierung auf, so dass zu jeder Zeit durch Abtastung der Teilungspur ein absoluter Positionswert ermittelbar ist.

Die inkrementellen Positionssignale bzw. absoluten Positionswerte sind zur weiteren Verarbeitung einer Folgeelektronik zugeführt. Handelt es sich bei der Maschine, in der die Positionsmesseinrichtung eingesetzt ist, um eine Werkzeugmaschine, so ist die Folgeelektronik beispielsweise eine numerische Steuerung.

Dadurch, dass Positionsmesseinrichtungen mechanisch mit der Maschine, in der sie eingesetzt werden, gekoppelt sind, ergeben sich Wechselwirkungen. So können mechanische Schwingungen der Maschine im Umfeld der Positionsmesseinrichtungen diese beeinflussen und die Qualität der Positionssignale und damit die Messgenauigkeit reduzieren. Die Qualität der Positionssignale wirkt sich wiederum auf die Genauigkeit von Antriebsregelkreisen aus, in denen die Positionssignale als Lageistwerte verwendet werden. Zur Optimierung der Maschine ist es notwendig, derartige Wechselwirkungen zu verstehen. Ein Mittel hierzu ist eine Frequenzanalyse der Positionssignale, bzw. -werte in der Folgeelektronik. Unterstützend werden oft zusätzliche Sensoren eingesetzt, beispielsweise Beschleunigungssensoren. Insbesondere bei absoluten Positionsmesseinrichtungen wird diese Möglichkeit aber durch die begrenzte Bandbreite der digitalen Schnittstellen, die zur Übertragung der Positions- und Sensorwerte verwendet werden, eingeschränkt.

Die US 8 135 977 B2 offenbart eine Positionsmesseinrichtung, die neben Positionswerten auch Werte eines Beschleunigungssensors messen und an eine Folgeelektronik ausgeben kann.

Die US 8 620 619 B2 offenbart eine Positionsmesseinrichtung, die Positionswerte und Werte eines Beschleunigungssensors überwacht und bei Feststellung eines Fehlerzustands entsprechende Alarmsignale ausgibt, um beispielsweise LEDs anzusteuern.

Die EP 2 375 221 A2 schlägt vor, bereits in der Positionsmesseinrichtung eine Frequenzanalyse der Messwerte von Beschleunigungssensoren vorzunehmen und hieraus Rückschlüsse auf Belastungen der Positionsmesseinrichtung zu ziehen.

### ZUSAMMENFASSUNG DER ERFINDUNG

Es ist Aufgabe der Erfindung, eine verbesserte Lösung zu schaffen, um mechanische Schwingungen im Umfeld einer Positionsmesseinrichtung zu analysieren.

Diese Aufgabe wird gelöst durch eine Positionsmesseinrichtung nach Anspruch 1.

Es wird nun eine Positionsmesseinrichtung vorgeschlagen, mit
- einem Teilungsträger, auf dem eine Messteilung angeordnet ist,
- wenigstens einem Positionssensor mit dem durch Abtastung der Messteilung positionsabhängige Messsignale generierbar sind,
- einer Verarbeitungseinheit, mit der die positionsabhängigen Messsignale zu Positionssignalen verarbeitbar sind und
- einer Schnittstelleneinheit zur Übertragung der Positionssignale zu einer Folgeelektronik über wenigstens einen Datenübertragungskanal,
wobei der Positionsmesseinrichtung wenigstens ein Bewegungssensor zugeordnet ist, der zeitlich veränderliche Messsignale generiert, die einer Signalanalyseeinheit zugeführt sind, mit der die Messsignale im Frequenzbereich auswertbar sind und diese Auswertung von Parametern abhängig ist, die von der Folgeelektronik zur Schnittstelleneinheit übertragbar sind und Ergebnisdaten, die aus der Auswertung der Messsignale resultieren, von der Schnittstelleneinheit zur Folgeelektronik übertragbar sind.

Vorteilhafte Ausgestaltungen einer erfindungsgemäßen Positionsmesseinrichtung ergeben sich aus den von Anspruch 1 abhängigen Ansprüchen.

Weiter ist es Aufgabe der Erfindung, ein Verfahren zum Betreiben einer erfindungsgemäßen Positionsmesseinrichtung anzugeben.

Diese Aufgabe wird gelöst durch ein Verfahren zum Betreiben einer Positionsmesseinrichtung nach Anspruch 11.

Es wird nun ein Verfahren zum Betreiben einer Positionsmesseinrichtung gemäß Anspruch 1, bzw. von Anspruch 1 abhängigen Ansprüchen, vorgeschlagen, das folgende Schritte aufweist:
- Übertragung von Parametern von der Folgeelektronik zur Positionsmesseinrichtung,
- Bestimmung von Ergebnisdaten in der Signalanalyseeinheit (50) durch Auswertung der Messsignale unter Berücksichtigung der Parameter und
- Übertragung der Ergebnisdaten zur Folgeelektronik.

Vorteilhafte Ausgestaltungen des erfindungsgemäßen Verfahrens ergeben sich aus den von Anspruch 11 abhängigen Ansprüchen.

Weitere Vorteile ergeben sich aus der nachfolgenden Beschreibung der Ausführungsbeispiele.

### KURZE BESCHREIBUNG DER ZEICHNUNGEN

Es zeigt
- Figur 1: ein Blockdiagramm einer erfindungsgemäßen Positionsmesseinrichtung,
- Figur 2: ein als Amplitudenspektrum ausgebildetes Frequenzspektrum der Messsignale eines Positionssensors,
- Figur 3: eine erste Ausführungsform einer Signalanalyseeinheit,
- Figur 4: ein Frequenzspektrum mit Beispielen für einstellbare Parameter,
- Figur 5: ein Frequenzspektrum mit weiteren Beispielen für einstellbare Parameter,
- Figur 6: ein Ordnungsspektrum mit Beispielen für einstellbare Parameter,
- Figur 7: eine zweite Ausführungsform einer Signalanalyseeinheit,
- Figur 8: ein weiteres Ausführungsbeispiel einer erfindungsgemäßen Positionsmesseinrichtung,
- Figur 9: ein weiteres Ausführungsbeispiel einer erfindungsgemäßen Positionsmesseinrichtung und
- Figur 10: ein weiteres Ausführungsbeispiel einer erfindungsgemäßen Positionsmesseinrichtung.

### BESCHREIBUNG DER AUSFÜHRUNGSFORMEN

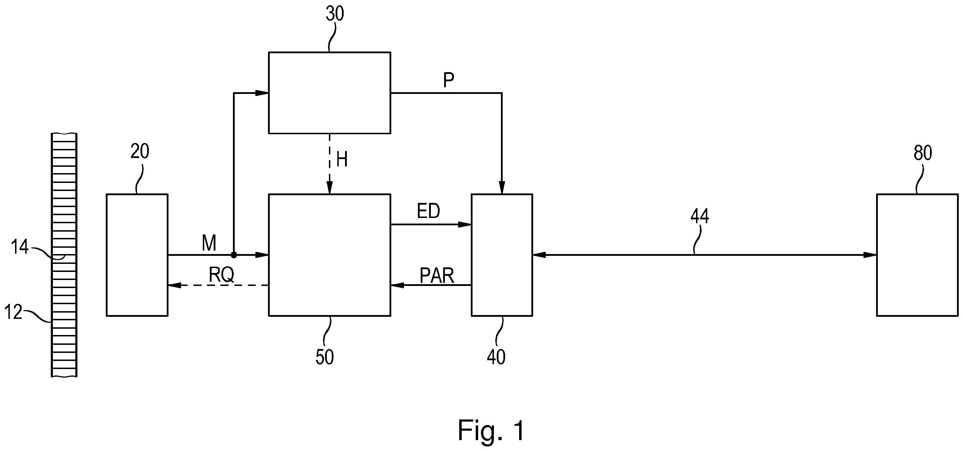

Figur 1 zeigt ein Blockdiagramm einer erfindungsgemäßen Positionsmesseinrichtung 10. Um die Grundfunktionalität - Messung, Verarbeitung und Ausgabe von positionsabhängigen Signalen - herzustellen, umfasst die Positionsmesseinrichtung 10 einen Teilungsträger 12 mit einer Messteilung 14, wenigstens einen Positionssensor 20, eine Verarbeitungseinheit 30, sowie eine Schnittstelleneinheit 40.

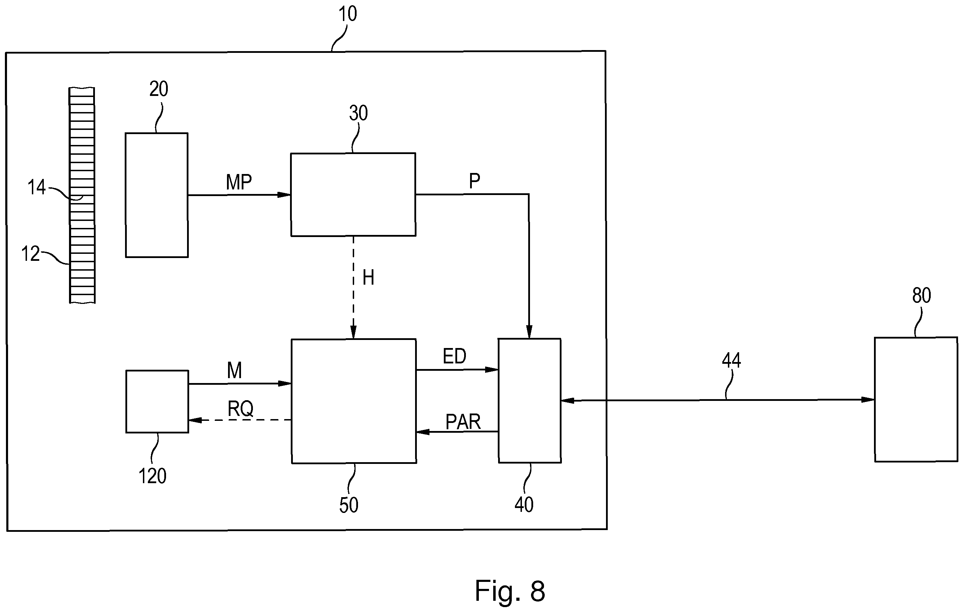

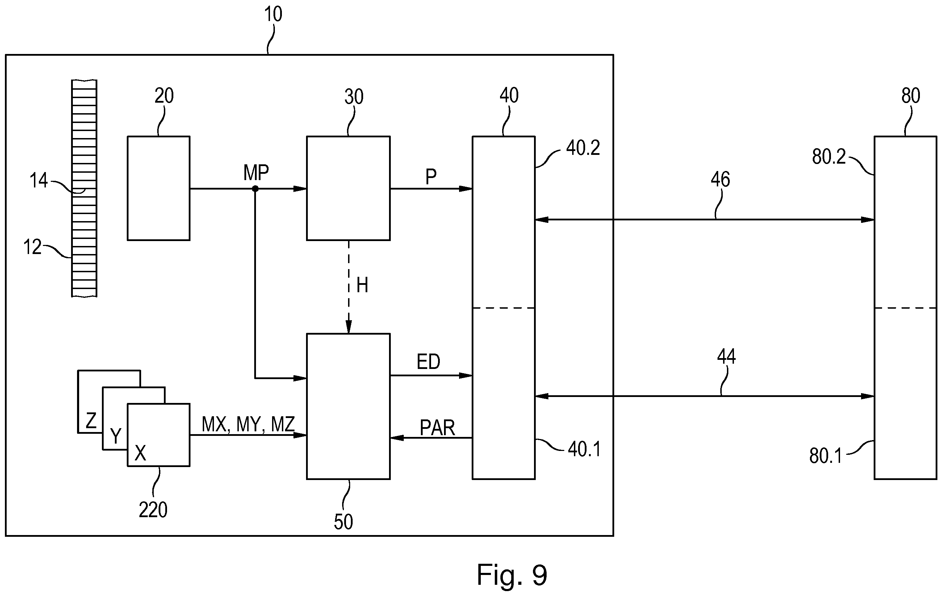

Erfindungsgemäß umfasst die Positionsmesseinrichtung 10 wenigstens einen Bewegungssensor. Bewegungssensoren sind Sensoren, die Bewegungen der Positionsmesseinrichtung 10 oder von Teilen der Positionsmesseinrichtung 10 erfassen und in elektrische Signale umwandeln. Sie können innerhalb oder außerhalb eines Gehäuses der Positionsmesseinrichtung 10 angeordnet sein. In diesem ersten Ausführungsbeispiel ist der wenigstens eine Bewegungssensor der Positionssensor 20, der bestimmungsgemäß Positionen, bzw. Positionsänderungen von zueinander beweglich angeordneten Teilen der Positionsmesseinrichtung 10 feststellt. Wie später anhand der Figuren 8 und 9 gezeigt werden wird, können Bewegungssensoren auch von Sensoren gebildet sein, die unabhängig von einer Positionsmessung sind. Das gilt beispielsweise für Beschleunigungssensoren oder Körperschallsensoren.

Im vorliegenden Beispiel ist der Positionssensor 20 geeignet ausgestaltet, um die Messteilung 14 auf dem Teilungsträger 12 abzutasten. Teilungsträger 12 und Positionssensor 20 sind dabei in bekannter Weise in einer Messrichtung relativ zueinander beweglich angeordnet, beispielsweise indem sie mit beweglichen Teilen einer Werkzeugmaschine verbunden sind, deren Relativposition zueinander bestimmt werden soll.

Ob es sich bei der Positionsmesseinrichtung um ein Längenmessgerät oder um ein Winkelmessgerät (Drehgeber) handelt, ist für die vorliegende Erfindung nicht relevant. Dementsprechend kann es sich beim Teilungsträger 12 um einen geraden Maßstab mit einer in Maßstabsrichtung angeordneten Messteilung 14, oder um eine kreisrunde Scheibe mit einer radial um einen Scheibendrehpunkt angeordneten Messteilung 14 handeln.

Aus der Abtastung der Messteilung 14 resultieren positionsabhängige Messsignale M, die der Verarbeitungseinheit 30 zugeführt sind. Die Messsignale M können analoge, oder digital codierte Signale umfassen. Die Verarbeitungseinheit 30 verarbeitet die Messsignale M zu Positionssignalen P und gibt sie an die Schnittstelleneinheit 40 aus. Auf die Verarbeitung wird hier nicht weiter eingegangen, es können Verarbeitungsschritte wie Signalkorrektur, Digitalisierung, etc. abgearbeitet werden.

Darüber hinaus sind die Messsignale M einer Signalanalyseeinheit 50 zugeführt, die geeignet ausgestaltet ist, um eine Berechnung und Auswertung der von den Messsignalen M umfassten Frequenzanteile in wenigstens einem Frequenzband durchzuführen. Insbesondere wenn es sich bei den Messsignalen M um digital codierte Signale handelt, die über eine digitale Schnittstelle vom Positionssensor 20 ausgebbar sind, kann dem Positionssensor 20 ein Anforderungssignal RQ zugeführt sein, das die Ausgabe eines aktuellen Positionswerts veranlasst.

Für die Berechnung können beliebige mathematische Auswerteverfahren zum Einsatz kommen, die geeignet sind, eine Transformation eines zeitlich veränderlichen Signals in den Frequenzbereich durchzuführen, beispielsweise eine Fast Fourier Transformation (FFT) oder daraus abgeleitete Verfahren. Zur Berechnung von Frequenzanteilen spezifischer Frequenzen ist insbesondere der Goerzel-Algorithmus geeignet. Eine weitere Möglichkeit ist es, ein digitales Filter einzusetzen und aus den gefilterten Daten den Effektivwert zu berechnen.

Aus der Signalanalyse resultierende Ergebnisdaten ED sind ebenfalls der Schnittstelleneinheit 40 zuführbar.

Die Schnittstelleneinheit 40 der Positionsmesseinrichtung 10 dient zur Kommunikation mit einer Folgeelektronik 80. Sie weist einen bidirektionalen Datenübertragungskanal 44 auf, über den im Rahmen der vorliegenden Erfindung von der Folgeelektronik 80 Parameter PAR zur Positionsmesseinrichtung 10, sowie in umgekehrter Richtung Ergebnisdaten ED zur Folgeelektronik 80 in Form von seriellen Datenpaketen übertragbar sind. Die Parameter PAR sind der Signalanalyseeinheit 50 zugeführt.

Außerdem ist die Schnittstelleneinheit 40 geeignet ausgestaltet, um Positionssignale P des wenigstens einen Positionssensors 20 zur Folgeelektronik 80 zu übertragen. Insbesondere bei Positionsmessgeräten, die absolute Positionswerte generieren, kann dies ebenfalls über den Datenübertragungskanal 44 erfolgen. Hierzu kann ein gemeinsames Übertragungsprotokoll verwendet werden.

Alternativ kann aber auch ein weiterer Datenübertragungskanal vorgesehen sein, beispielsweise wenn es sich bei der Positionsmesseinrichtung 10 um ein inkrementales Positionsmessgerät handelt, bei dem die Positionssignale P in Form von analogen oder digitalen, zueinander phasenverschobenen Signalen ausgegeben werden.

Ebenso ist es möglich, dass neben dem erfindungsgemäßen Datenübertragungskanal 44 ein weiterer digitaler Datenübertragungskanal vorgesehen ist, über den eine unabhängige Kommunikation mit der Folgeelektronik 80, oder einer von der Folgeelektronik 80 verschiedenen weiteren Folgeelektronik, insbesondere zur Übertragung der Positionssignale P (in digital codierter Form), möglich ist. Auf diese Weise stehen zwei digitale Schnittstellen zur Verfügung, von denen eine zum bestimmungsgemäßen Betreiben der Positionsmesseinrichtung (Messung und Übertragung von Positionswerten) und die andere zur Herstellung der erfindungsgemäßen Funktion (Signalanalyse von Messsignalen) verwendet werden kann. Die Schnittstellen sind mit Vorteil auch mechanisch getrennt und können verschiedene Übertragungsprotokolle verwenden.

Handelt es sich bei der Messteilung 14 um eine Inkrementalteilung, so sind die positionsabhängigen Messsignale M periodisch, d.h. der Signalverlauf wiederholt sich mit jeder Teilungsperiode. Die Signalfrequenz der Messsignale M wird von der Relativbewegung zwischen Teilungsträger 12 und Positionssensor 20 und der Teilungsperiode der Messteilung 14 bestimmt. Meist werden wenigstens zwei positionsabhängige Messsignale M generiert, die eine Phasenverschiebung zueinander aufweisen, z.B. 90°. Auf diese Weise ist eine Bestimmung der Bewegungsrichtung möglich. Bei der Mehrzahl inkrementaler Positionsmesseinrichtungen sind die Messteilung 14 und der Positionssensor 20 so aufeinander abgestimmt, dass unter Idealbedingungen und bei konstanter Bewegungsgeschwindigkeit zwischen Teilungsträger 12 und Abtasteinheit 14 die Messsignale M exakt sinusförmig sind. Ein Frequenzspektrum der Messsignale M weist deshalb genau bei einer Frequenz eine Signalspitze auf. Derartige Positionsmesseinrichtungen basieren meist auf einem optischen oder magnetischen Abtastprinzip.

Darüber hinaus sind in der Automatisierungstechnik Positionsmesseinrichtungen verbreitet, bei denen sich Positionsänderungen durch Modulation eines Trägersignals auswirken (auch als feldmodulierende Positionsmesseinrichtungen bezeichnet). Hier zeigt das Frequenzspektrum des Messsignals M Signalspitzen bei zwei Frequenzen, der des Trägersignals und der, die von der Positionsänderung generiert wird. Derartige Positionsmesseinrichtungen basieren auf induktiven oder kapazitiven Abtastprinzipien.

Auch bei Positionsmesseinrichtungen, bei denen die Positionsbestimmung auf der Abtastung einer absolut codierten Messteilung basiert, können Frequenzspektren ermittelt werden, beispielsweise indem in gleichen Zeitabständen Positionswerte gemessen werden und jeweils die Positionsänderung zur vorhergehenden Messung bestimmt und ausgewertet wird. Hier gilt, dass unter Idealbedingungen und bei konstanter Bewegungsgeschwindigkeit im Frequenzspektrum keine Signalspitzen auftreten, da die Positionsänderungen einen konstanten Wert ergeben müssen.

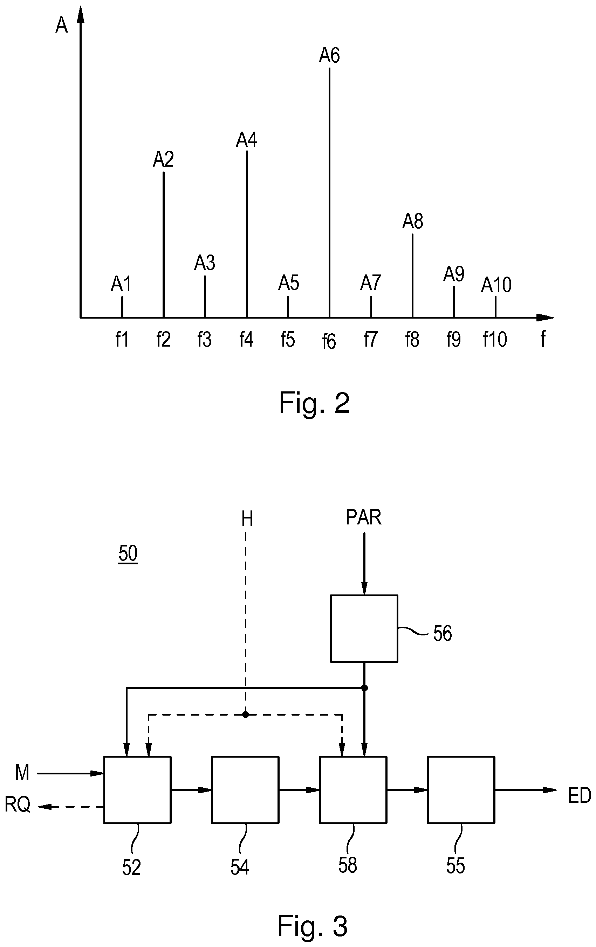

Zeigt das Frequenzspektrum von positionsabhängigen Messsignalen M neben den zu erwartenden Signalspitzen noch Signalspitzen bei anderen Frequenzen, so kann das ein Hinweis auf eine Fehlfunktion oder auf störende äußere Einflüsse sein. Figur 2 zeigt beispielhaft ein als Amplitudenspektrum ausgebildetes Frequenzspektrum der Messsignale M eines Positionssensors 20 einer inkrementellen Positionsmesseinrichtung bei konstanter Bewegung. Es zeigt Signalspitzen bei Frequenzen f1 bis f10 mit Amplitudenwerten A1 bis A10. Die Signalspitze bei Frequenz f6 weist die höchste Amplitude A6 auf und entspricht beispielsweise der Signalfrequenz der Positionssignale. Neben dieser Signalspitze sollte bei störungsfreiem Betrieb im Frequenzspektrum keine weitere signifikante Signalspitze auftreten. Die Signalspitzen bei den Frequenzen f1 bis f5 und f7 bis f10 werden daher von Störgrößen verursacht.

Allgemein betrachtet können Störgrößen, die sich als Signalspitzen im Frequenzspektrum manifestieren, sowohl aus internen, als auch aus externen Randbedingungen, Betriebszuständen oder auch Fehlerzuständen resultieren. Interne Ursachen sind beispielsweise Toleranzen bzw. Fehlfunktionen bei der Lagerung der beweglich gelagerten Komponenten der Positionsmesseinrichtung (Lagerung der Geberwelle eines Drehgebers oder des Abtastkopfes eines Längenmessgeräts).

Externe Störgrößen können, je nach Einsatzgebiet der Positionsmesseinrichtung, vielfältige Ursachen haben, wie beispielsweise
- magnetische Rastmomente eines Antriebsmotors, an dessen Welle ein Antriebsdrehgeber gekoppelt ist,
- Toleranzen und Fehlfunktionen von Achslagern außerhalb der Positionsmesseinrichtung,
- gegenseitige Beeinflussung der Achsantriebe bei mehrachsigen Werkzeugmaschinen,
- Anbaufehler der Positionsmesseinrichtung,
- Verschleiß von Maschinenteilen oder, bei Werkzeugmaschinen, eines Werkzeugs, oder
- die Belastungssituation eines Antriebsmotors, insbesondere bei der Bearbeitung eines Werkstücks in einer Werkzeugmaschine.

Da Positionsmesseinrichtungen in der Automatisierungstechnik, insbesondere bei Werkzeugmaschinen, meist zur Ermittlung von Lageinformation für Regelkreise zur Steuerung von Antrieben eingesetzt werden, kann es zu gegenseitiger Beeinflussung von Ursache und Wirkung kommen, d.h. die Ursache einer Störgröße wirkt sich auf die Positionsmessung aus, die wiederum den Regelkreis beeinflusst (Resonanzeffekte). Im Umkehrschluss bedeutet das, dass durch Analyse der positionsabhängigen Messsignale M im Frequenzbereich Rückschlüsse auf die Ursachen von Störungen gezogen werden können. Dieses Wissen kann wiederum genutzt werden, das Gesamtsystem zu optimieren.

Um eine möglichst effektive Ermittlung und Überwachung von Störgrößen zu ermöglichen, ist die Signalanalyseeinheit 50 erfindungsgemäß parametrierbar aufgebaut. Wie in den folgenden Ausführungsbeispielen gezeigt, kann sich die Parametrierbarkeit auf die Ausführung der Signalanalyse, sowie auf den Umfang der Signalanalyse beziehen.

Figur 3 zeigt hierzu eine erste Ausführungsform einer Signalanalyseeinheit 50. Sie umfasst eine Datenerfassungseinheit 52, einen Eingangsspeicher 54, einen Ausgangsspeicher 55, einen Parameterspeicher 56 und eine Recheneinheit 58.

Der Parameterspeicher 56 dient zur Speicherung von Parametern PAR. Von dort können sie von der Recheneinheit 58 und gegebenenfalls auch von der Datenerfassungseinheit 52 abgerufen werden.

Die Datenerfassungseinheit 52 dient zur Erfassung aktueller Messwerte der Messsignale M in konstanten Zeitabständen. Die Zeitabstände können von einem Taktsignal abgeleitet sein, das der Signalanalyseeinheit 50 zur Verfügung steht und beispielsweise auch die Abläufe in der Recheneinheit 58 steuert. Das Taktsignal kann von einem quarzgesteuerten Taktgenerator oder einer PLL stammen. Handelt es sich bei den Messsignalen M um analoge Signale, so umfasst die Datenerfassungseinheit 52 einen Analog-DigitalWandler zur Umwandlung von Momentanwerten der Messsignale M in digitale Messwerte. Diese sind im Eingangsspeicher 54 speicherbar. Sind die Messsignale M dagegen bereits digital codiert, so umfasst die Datenerfassungseinheit 52 eine Schnittstelle zum Einlesen aktueller Messwerte und deren Speicherung im Eingangsspeicher 54. Gegebenenfalls ist hierzu ein Anforderungssignal RQ an den Positionssensor 20 ausgebbar.

Die Erfassung und Speicherung von Messwerten kann kontinuierlich oder befehlsgesteuert über einen Parameter PAR erfolgen. Bei kontinuierlicher Messwerterfassung ist der Eingangsspeicher 54 mit Vorteil als Ringspeicher ausgeführt, bei dem alte Messwerte zyklisch überschrieben werden.

Die Recheneinheit 58 ist geeignet ausgestaltet, um aus den Messwerten im Eingangsspeicher 54 ein Frequenzspektrum, insbesondere ein Amplitudenspektrum, in wenigstens einem Frequenzband oder über die gesamte Bandbreite der Eingangssignale zu berechnen und hieraus, basierend auf den Parametern PAR, gespeichert im Parameterspeicher 56, Ergebnisdaten ED zu ermitteln. Die Ergebnisdaten ED sind im Ausgangsspeicher 55 speicherbar und können von dort über die Schnittstelleneinheit 40 zur Folgeelektronik 80 ausgegeben werden.

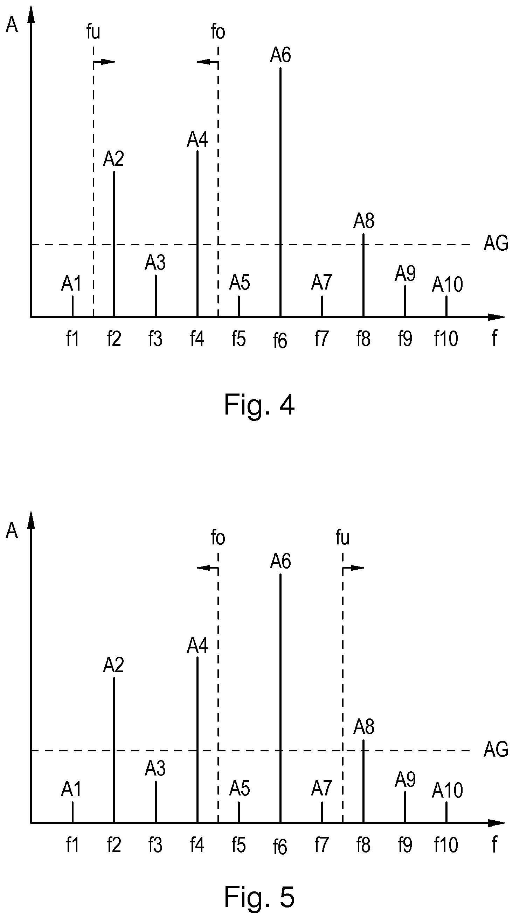

Im Folgenden sollen anhand von Figur 4 einige Beispiele für einstellbare Parameter erläutert werden.

Durch die Festlegung eines Frequenzbandes, beispielsweise durch Definition einer unteren Grenzfrequenz fu und einer oberen Grenzfrequenz fo kann das Frequenzspektrum gezielt in einem Bereich ausgewertet werden. Dies ist vorteilhaft, wenn ein Frequenzbereich, in dem Störungen erwartet werden, überwacht werden soll. Wird keine untere Grenzfrequenz fu angegeben, so ist das Frequenzband durch einen Gleichspannungswert (fu = 0 Hz) begrenzt. Wird keine obere Grenzfrequenz fo angegeben, so ist das Frequenzband durch die höchste berechenbare Frequenz begrenzt, die durch das Abtasttheorem bestimmt ist. Im dargestellten Beispiel umfassen die Ergebnisdaten ED die Frequenzen f2, f3 und f4 mit den korrespondierenden Amplituden A2, A3 und A4.

Anstelle einer unteren und oberen Grenzfrequenz fo, fu kann ein Frequenzband auch durch die Angabe einer Mittenfrequenz (dem Mittelwert zwischen oberer und unterer Grenzfrequenz fo, fu) und einer Bandbreite (der Differenz aus oberer und unterer Grenzfrequenz fo, fu) definiert werden.

Der Ergebnisbereich kann durch weitere Parameter PAR eingeschränkt werden, beispielsweise wenn nur eine Anzahl von N Frequenzen mit den größten Amplituden ermittelt werden sollen. Wird also N = 2 gesetzt, so umfassen die Ergebnisdaten die Frequenzen f2 und f4 mit den Amplituden A2 und A4.

Alternativ oder zusätzlich kann über weitere Parameter PAR eine Grenzamplitude AG festgelegt werden, so dass nur Frequenzen ermittelt werden, deren Amplituden die Grenzamplitude AG überschreiten. Auf diese Weise können Frequenzanteile, deren Amplituden zu gering sind, um eine aussagekräftige Beurteilung zu erlauben, von den Ergebnisdaten ED ausgeschlossen werden. Außerdem kann diese Option genutzt werden, um festzustellen, ob überhaupt eine Amplitude des Frequenzspektrums (im ausgewählten Frequenzband) die Grenzamplitude AG überschreitet. In diesem Fall ist ein Ergebnisdatum ED, das nur ein Bit umfasst, ausreichend. Im dargestellten Beispiel umfassen die Ergebnisdaten ED im Frequenzband zwischen der unteren Grenzfrequenz fu und der oberen Grenzfrequenz fo, unter der Bedingung, dass die dargestellte Grenzamplitude AG überschritten werden muss, wiederum die Frequenzen f2 und f4 mit den Amplituden A2 und A4.

Die Grenzamplitude AG ist im Beispiel vereinfacht durch einen konstanten Wert dargestellt. Sie kann aber auch durch eine beliebige mathematische Funktion gebildet werden. Sollen mehrere Frequenzbänder ausgewertet werden, ist es auch möglich, verschiedenen Frequenzbändern unterschiedliche Grenzamplituden AG zuzuordnen. Auf diese Weise können komplexe Hüllkurven gebildet werden, die als Kriterium für die Auswertung des Frequenzspektrums dienen.

Wie in Figur 5 dargestellt, kann auch ein Frequenzband von der Auswertung ausgeschlossen werden, wenn für die untere Grenzfrequenz fu eine höhere Frequenz gewählt wird, als für die obere Grenzfrequenz fo. So kann beispielsweise das Frequenzband, in dem bei einer inkrementalen Positionsmesseinrichtung bei konstanter Bewegungsgeschwindigkeit die Signalfrequenz der Positionssignale (im Beispiel f6) liegt, gezielt von der Auswertung ausgeschlossen werden, so dass nur Signalspitzen ausgewertet werden, die aus Störungen resultieren.

Sind für die Auswertung nicht einzelne Amplitudenwerte bei bestimmten Frequenzen von Interesse, sondern die Summe der Störungen im Frequenzband, so kann, ebenfalls über einen Parameter PAR, eingestellt werden, dass ein Effektivwert (quadratischer Mittelwert, RMS) der Signalspitzen im Frequenzband (entsprechend der Signalleistung im selektierten Frequenzband) berechnet wird. Auch für diese Auswertung kann eine Kombination mit oben beschriebenen Parametern PAR vorteilhaft sein.

Darüber hinaus können mehrere Frequenzbänder für die Auswertung definiert werden, für die gegebenenfalls separate Parameter PAR eingestellt werden können.

Außerdem kann eine Möglichkeit vorgesehen sein, über Parameter PAR das verwendete Auswerteverfahren (die verwendeten Algorithmen) auszuwählen und zu parametrieren, beispielsweise durch Definition der Frequenzauflösung, die für die Berechnung eines Frequenzspektrums zugrunde gelegt wird.

Handelt es sich bei der Positionsmesseinrichtung 10 um ein Winkelmessgerät oder einen Drehgeber, so ist es besonders vorteilhaft, wenn in der Signalanalyseeinheit 50 an Stelle eines Frequenzspektrums ein Ordnungsspektrum berechnet wird. Auch hierbei handelt es sich um eine Signalanalyse im Frequenzbereich, allerdings sind bei einer Ordnungsanalyse den Linien des Ordnungsspektrums Ordnungen (Vielfache) der Drehzahl einer Welle der Positionsmesseinrichtung 10, bzw. einer Welle, deren Winkelstellung von der Positionsmesseinrichtung 10 gemessen wird, zugeordnet. Die Ordnungsanalyse ist somit drehzahlabhängig.

Dreht sich die Welle beispielsweise mit 3000 Umdrehungen pro Minute, so entspricht das einer Drehzahl von 50 Hz (1/s). Die Signalspitze der ersten Ordnung entspricht somit dem Signalanteil des Messsignals M bei 50 Hz. Die zweite Ordnung liegt dann bei 100 Hz, die dritte Ordnung bei 150 Hz, usw.

Diese Auswerteverfahren ist deshalb vorteilhaft, weil Störungen des Messsignals M häufig drehzahlabhängig sind, d.h. bei Frequenzen auftreten, die Vielfache der Drehzahl sind. Der Bezug auf die Drehzahl erleichtert somit die Identifizierung der Ursache des Störeinflusses.

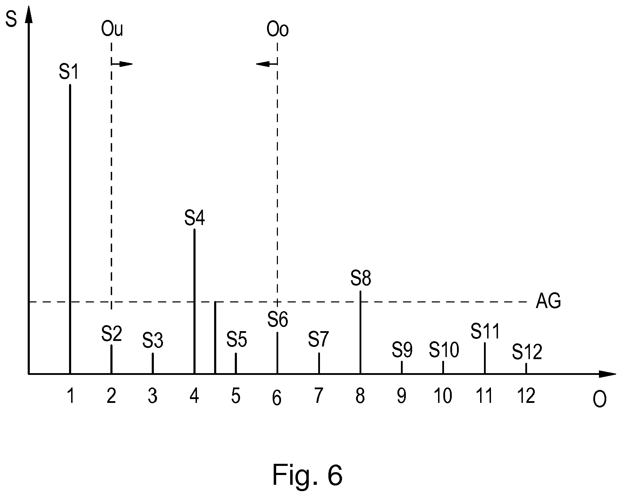

Figur 6 zeigt ein Beispiel für ein Ordnungsspektrum. Der Signalanteil S1 des Messsignals M an der Position der ersten Ordnung weist die höchste Signalamplitude auf, die Signalanteile S4 und S8 der vierten und achten Ordnung stellen signifikante Störanteile des Messsignals M dar. Als Hilfssignal H ist der Signalanalyseeinheit 50 in diesem Beispiel ein Drehzahlsignal zugeführt.

Korrespondierend zu den auswählbaren Parametern beim Frequenzspektrum kann auch hier eine Bandbreite (ein Ordnungsbereich) für auszuwertende Ordnungen, begrenzt durch eine untere Ordnung Ou und eine obere Ordnung Oo, sowie eine beliebige Grenzamplitude AG für die Signalamplitude der Signalanteile S1 bis S12 festgelegt werden.

Die Signalanalyse basierend auf einem Ordnungsspektrum auszuführen ist besonders bei der Bearbeitung von Werkstücken mittels einer Werkzeugmaschine vorteilhaft. Beispielsweise kann bei einer Fräsbearbeitung der Eingriff von Werkzeugschneiden in das Werkstück Vibrationen verursachen. Die Grundfrequenz dieser Vibrationen ist abhängig von der Drehzahl der Werkzeugspindel und der Anzahl der Schneiden, die das Fräswerkzeug über seinen Umfang aufweist. Starke Vibrationen werden auch als "Rattern" bezeichnet und sind unerwünscht, weil sie Bearbeitungsmuster auf dem Werkstück hinterlassen (sog. Rattermarken). Mittels eines Ordnungsspektrums, bei dem der Ordnungsbereich auf die Ordnung eingeschränkt wird, wo die Vibrationen zu erwarten sind (Drehzahl der Spindel multipliziert mit der Anzahl der Schneiden) können Ergebnisdaten ED generiert werden, die die Signalamplitude der ausgewählten Ordnung (bzw. Ordnungen) umfassen. Zusätzlich, oder alternativ, kann durch Festlegen einer Grenzamplitude AG für die ausgewählte Ordnung (bzw. Ordnungen) untersucht werden, ob die Vibrationen die Grenzamplitude AG überschreiten.

Die Parametrierbarkeit der Signalanalyse im Frequenzbereich ermöglicht hier eine flexible Anpassung an die Randbedingungen der Bearbeitung (Drehzahl, Werkzeug, Grob- oder Feinbearbeitung, etc.).

Die Signalanalyseeinheit 50 kann geeignet ausgestaltet sein, sowohl eine Frequenzanalyse, als auch eine Ordnungsanalyse auszuführen. Die Auswahl, welches Auswerteverfahren zum Einsatz kommt, kann wiederum über einen Parameter PAR erfolgen.

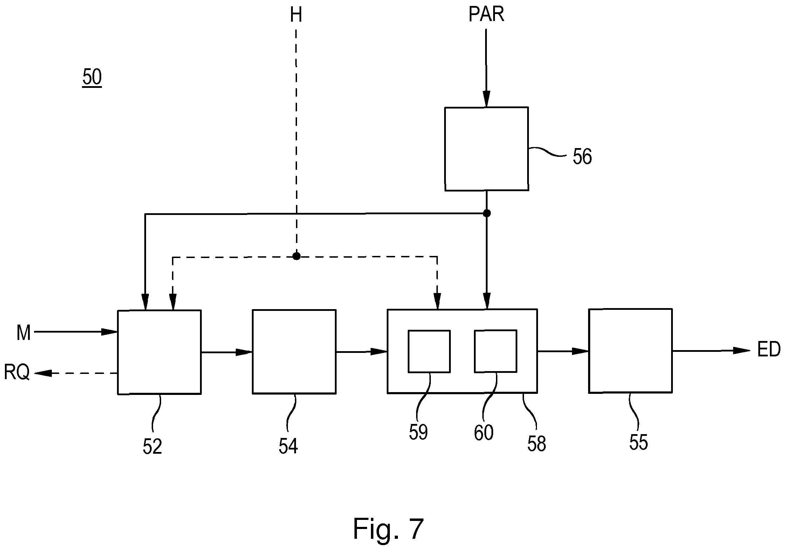

Figur 7 zeigt eine alternative Ausführungsform einer Signalanalyseeinheit 50. Sie unterscheidet sich von der anhand von Figur 3 beschriebenen Signalanalyseeinheit 50 durch die Ausgestaltung der Recheneinheit 58. In diesem Beispiel umfasst die Recheneinheit 58 ein programmierbares Filter 59, sowie eine nachgeschaltete RMS-Berechnungseinheit 60.

Das programmierbare Filter 59 kann als Hochpass-, Tiefpass,- Bandpass- oder Kerbfilter ausgeführt sein. Gegebenenfalls kann die Filterfunktion des Filters über Parameter PAR wählbar sein. Wie im vorhergehenden Beispiel ist das auszuwertende Frequenzband durch Festlegung der entsprechenden Grenzfrequenzen fu, fo (bzw. die Mittenfrequenz und die Bandbreite) ebenfalls über Parameter PAR einstellbar.

In der RMS-Berechnungseinheit 60 ist der Effektivwert (RMS) der gefilterten Daten ermittelbar, also der Mittelwert aller Störungen des Messsignals M im gewählten Frequenzband. Der Effektivwert bildet ein Ergebnisdatum ED dieser Variante einer Signalanalyseeinheit 50. Für die gleichzeitige Auswertung mehrerer Frequenzbänder können weitere programmierbare Filter 59 und RMS-Berechnungseinheiten 60 vorgesehen sein.

In einer alternativen Ausgestaltung ist das programmierbare Filter 59 als Mitlauffilter ausgebildet. Ein Mitlauffilter ist ein Bandpassfilter, dessen Mittenfrequenz mit der Drehzahl variiert. Hierzu ist der Signalanalyseeinheit 50 als Hilfssignal H ein Drehzahlsignal zugeführt. Die Mittenfrequenz des programmierbaren Filters 59 ist nun relativ zur Frequenz des Drehzahlsignals bestimmt, wobei der Abstand der Mittenfrequenz von der Frequenz des Drehzahlsignals und die Bandbreite durch Parameter PAR einstellbar sind. Vergleichbar mit der oben beschriebenen Ermittlung eines Ordnungsspektrums, aber einfacher in der Realisierung, können mit dieser Variante drehzahlabhängige Störungen analysiert werden.

Das Auswerteverfahren (Filterung und Berechnung eines Effektivwertes) der in Figur 7 dargestellten Variante einer Signalanalyseeinheit 50 ist weniger komplex als die Auswerteverfahren (Frequenzanalyse, Ordnungsanalyse) der in Figur 3 dargestellten Varianten und erfordert weniger Rechenleistung. Sie ist daher vorteilhaft, wenn Rechenleistung eingespart, oder durch intensive Berechnungen verursachte Verlustleistung und die damit verbundene Wärmeentwicklung in der Positionsmesseinrichtung vermieden werden soll.

Die bisher genannten Parameter PAR betreffen die Auswertung der Messsignale M und können daher als Auswerteparameter bezeichnet werden. Wie anhand der vorhergehenden Beispiele dargestellt, können Auswerteparameter direkt auch die Art der Ergebnisdaten ED bestimmen, also ob es sich bei den Ergebnisdaten ED um einzelne Bits, Einzelwerte, Wertepaare, etc. handelt.

Neben den Auswerteparametern können die Parameter PAR noch Ausführungsparameter umfassen, die bestimmen, wann und zu welchen Bedingungen eine Auswertung der Messsignale M erfolgt.

So kann die Auswertung durch einen unbedingten oder bedingten Startbefehl der Folgeelektronik 80 gestartet werden. Bei einem unbedingten Startbefehl erfolgt der Start der Auswertung der Messsignale M ohne Verzögerung. Bei einem bedingten Startbefehl ist der Start von wenigstens einer weiteren Bedingung abhängig, beispielsweise vom Erreichen einer bestimmten Absolutposition, Geschwindigkeit, etc. Eine hierfür benötigte Information kann der Signalanalyseeinheit 50 beispielsweise über das Hilfssignal H von der Verarbeitungseinheit 30 zugeführt sein. Erfordert ein bedingter Startbefehl eine Information, die nicht innerhalb der Positionsmesseinrichtung 10 zur Verfügung steht, so kann der Positionsmesseinrichtung 10 diese Information über ein externes Signal zugeführt sein.

Weiter können Startbefehle, die lediglich eine einmalige Auswertung der Messsignale M bewirken, von Startbefehlen, die eine kontinuierliche Auswertung starten, unterschieden werden. Im letzteren Fall stehen im Ausgangsspeicher 55 stets aktuelle Ergebnisdaten ED zur Verfügung.

Darüber hinaus kann ein Anhaltebefehl vorgesehen sein, der die Auswertung der Messsignale M beendet.

Figur 8 zeigt ein weiteres Ausführungsbeispiel einer erfindungsgemäßen Positionsmesseinrichtung 10. Komponenten, die bereits in Verbindung mit Figur 1 beschrieben wurden, tragen das gleiche Bezugszeichen. Der Unterschied zum vorherigen Ausführungsbeispiel ist nun, dass als Bewegungssensor an Stelle des Positionssensors 20 ein separater Beschleunigungssensor 120 zum Einsatz kommt. Der Positionssensor 20 dient in diesem Ausführungsbeispiel ausschließlich der Positionsmessung. Hierzu sind Positionsmesssignale MP des Positionssensors 20 der Verarbeitungseinheit 30 zugeführt.

In einer besonders vorteilhaften Ausgestaltung ist der Beschleunigungssensor 120 mechanisch mit einer Komponente der Positionsmesseinrichtung 10 verbunden. Auf diese Weise ist er fester Bestandteil der Positionsmesseinrichtung 10 und die erfindungsgemäßen Analyseverfahren stehen mit dem bestimmungsgemäßen Anbau der Positionsmesseinrichtung 10 an die Maschine oder Anlage sofort zur Verfügung. Beispielsweise ist der Beschleunigungssensor 120 innerhalb eines Gehäuses der Positionsmesseinrichtung 10 angeordnet. Bei einem Längenmessgerät kann der Beschleunigungssensor 120 beispielsweise im Gehäuse des Abtastkopfes angeordnet sein, bei einem Drehgeber an geeigneter Stelle innerhalb des Gehäuses, in dem sich auch der Teilungsträger 12 und die Elektronikkomponenten zur Signalverarbeitung befinden. Bei Maschinen mit mehreren Bewegungsachsen, wie Werkzeugmaschinen oder Roboterarmen, können mit dem Beschleunigungssensor 120 Einflüsse anderer Bewegungsachsen analysiert werden, als die der Positionsmesseinrichtung 10 zugeordneten Bewegungsachse (deren Bewegung von der Positionsmesseinrichtung 10 gemessen wird), wenn die Positionsmesseinrichtung 10, bzw. die Komponente, mit der der Beschleunigungssensor 120 mechanisch verbunden ist, bei Positionierungsvorgängen mitbewegt wird.

Alternativ kann der Beschleunigungssensor 120 auch außerhalb der Positionsmesseinrichtung 10 an einem zu überwachenden Maschinenteil angeordnet sein. Die Übertragung der Messsignale M an die Positionsmesseinrichtung 10, bzw. an die Auswerteelektronik, die die Signalanalyseeinheit 50 umfasst, erfolgt dann über eine geeignete Schnittstelle. Die Signalübertragung kann analog oder digital erfolgen, drahtgebunden oder drahtlos (optisch oder mittels Funksignalen).

Die Messsignale M des Beschleunigungssensors 120 sind wiederum der Signalanalyseeinheit 50 zugeführt. Auch bei diesen Messsignalen M handelt es sich um zeitlich sich ändernde, bewegungsabhängige Signale. Somit sind alle anhand der Figuren 2 bis 7 erlangten Erkenntnisse auf dieses Ausführungsbeispiel übertragbar und Signalanalyseeinheiten 50, wie sie anhand der Figuren 3 und 7 beschrieben wurden, einsetzbar. Auch hier ist die Parametrierbarkeit der Signalanalyseeinheit 50 von entscheidendem Vorteil, um das Messsignal M gezielt in einem auswählbaren Zeitraum und/oder einem zugeordneten Frequenzband auszuwerten.

Insbesondere wenn der Start der Auswertung positionsabhängig erfolgen soll, kann von der Verarbeitungseinheit 30 ein Hilfssignal H mit einer entsprechenden Positionsinformation an die Signalanalyseeinheit 50 ausgegeben werden.

Diese Ausführungsform ist auch dann besonders vorteilhaft, wenn Vibrationen der Maschine im Bereich der Positionsmesseinrichtung 10 ausgewertet werden sollen. Die Vibrationen können aus Rastmomenten von Motoren, aus der Bearbeitung eines Werkstücks, Taumel- und Unwuchteffekten o.ä. resultieren.

Anstelle von Beschleunigungssensoren können auch andere Sensoren zum Einsatz kommen, die bewegungsabhängige Messsignale generieren, beispielsweise Körperschallsensoren oder Sensoren, mit denen elastische Verformungen von Maschinenteilen messbar sind.

Figur 9 zeigt ein weiteres Ausführungsbeispiel einer erfindungsgemäßen Positionsmesseinrichtung 10. Es unterscheidet sich vom vorherigen Ausführungsbeispiel zum einen darin, dass ein Beschleunigungssensor 220 eingesetzt wird, der Beschleunigungen in drei Bewegungsrichtungen X, Y, Z erfasst. Entsprechende Messsignale MX, MY, MZ sind der Signalanalyseeinheit 50 zugeführt. Zum anderen sind, wie im ersten Ausführungsbeispiel, die Positionsmesssignale MP ebenfalls der Signalanalyseeinheit 50 zugeführt. Sowohl der Beschleunigungssensor 220, als auch der Positionssensor 20 sind somit erfindungsgemäße Bewegungssensoren.

Die Signalanalyseeinheit 50 ist mit Vorteil für eine vollständige oder teilweise Parallelverarbeitung der Messsignale MX, MY, MZ, MP ausgelegt. Handelt es sich um eine Signalanalyseeinheit 50, wie anhand von Figur 3 beschrieben, so ist für eine Parallelverarbeitung der Messsignale MX, MY, MZ, MP je Signal eine Datenerfassungseinheit 52, eine Recheneinheit 58, ein Eingangsspeicher 54 und ein Ausgangsspeicher 55 vorgesehen. Sollen alle Messsignale MX, MY, MZ, MP basierend auf den gleichen Parametern ausgewertet werden, ist ein gemeinsam genutzter Parameterspeicher 56 ausreichend. Für eine teilweise Parallelverarbeitung ist es sinnvoll, die Datenerfassung parallel zu gestalten und lediglich die Berechnungen hintereinander in einer gemeinsamen Recheneinheit 58 durchzuführen.

Analog dazu kann auch eine Signalanalyseeinheit 50 nach Figur 7 für eine vollständige oder teilweise Parallelverarbeitung ausgelegt sein, wobei es auch hier von Vorteil ist, die Messwerte der Messsignale MX, MY, MZ, MP parallel zu erfassen und lediglich die Berechnungen hintereinander auszuführen.

In diesem Ausführungsbeispiel erfolgt die Kommunikation mit der Folgeelektronik 80 über zwei separate Datenübertragungskanäle 44, 46 die jeweils als digitale bidirektionale Datenschnittstellen ausgeführt sein können. So kann die Kommunikation, die den bestimmungsgemäßen Betrieb der Positionsmesseinrichtung 10 betrifft (insbesondere die Anforderung und Übertragung von Positionswerten P), über eine spezialisierte Messgeräteschnittstelle wie beispielsweise EnDat erfolgen, wohingegen die Übertragung von Parametern PAR und Ergebnisdaten ED über eine andere Datenschnittstelle, wie beispielsweise einen Feldbus (ProfiBus, ProfiNet,...) erfolgen kann. Für die Kommunikation können getrennte Schnittstellenmodule 40.1, 40.2 vorgesehen sein, die mit unterschiedlichen Modulen 80.1, 80.2 der Folgeelektronik 80 verbunden sind, wobei es sich bei den Modulen 80.1, 80.2 auch um separate Einheiten (Geräte) handeln kann.

Dadurch, dass Störgrößen, die Beschleunigungen (Vibrationen) verursachen, jetzt in drei Raumrichtungen erfasst werden, kann nun auf die Richtung geschlossen werden, aus der die Störung auf die Positionsmesseinrichtung 10 einwirkt. Da darüber hinaus auch die Positionsmesssignale MP in der Signalanalyseeinheit 50 ausgewertet werden, ist es auch möglich, eine Korrelation der Störgröße zu Messfehlern bei der Positionsmessung herzustellen. Durch Anpassung der Parameter PAR können zum einen gezielt Frequenzbänder ausgewählt und überwacht werden, zum anderen kann durch Festlegung eines Startzeitpunkts für die Auswertung eine unnötige Belastung der Elektronik der Positionsmesseinrichtung 10, die sich durch erhöhten Stromverbrauch und daraus resultierender Wärmeentwicklung bemerkbar macht, vermieden werden. Hier zeigt sich besonders deutlich, dass durch die Parametrierbarkeit der Auswertung eine besonders effektive Analyse von Maschineneigenschaften möglich ist.

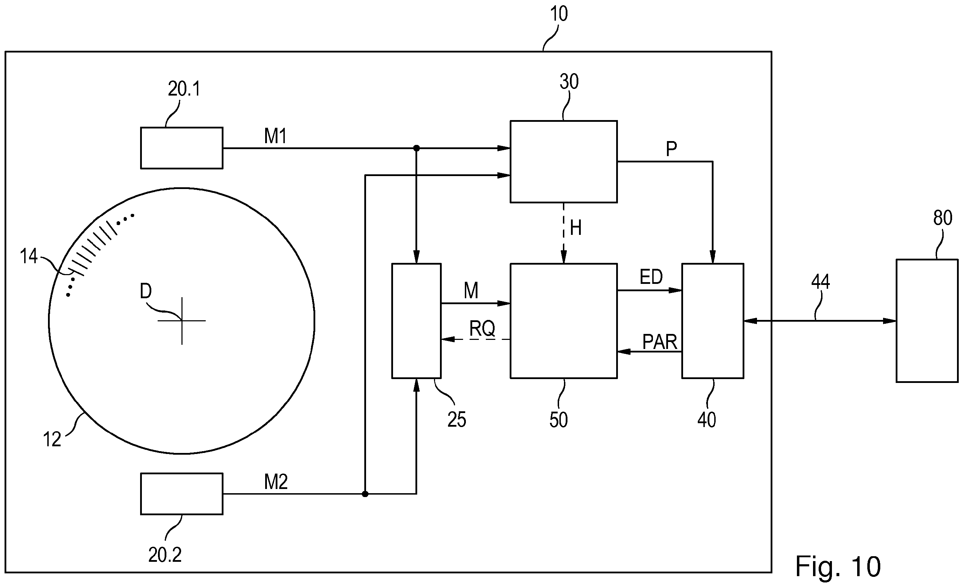

Figur 10 zeigt ein weiteres Ausführungsbeispiel einer erfindungsgemäßen Positionsmesseinrichtung 10. Diese Positionsmesseinrichtung 10 ist als Drehgeber oder Winkelmessgerät ausgeführt. Dementsprechend ist der Teilungsträger 12 eine kreisrunde Scheibe oder ein Ring, der um einen Drehpunkt D drehbar gelagert ist. Die Messteilung 14 ist konzentrisch um den Drehpunkt D angeordnet und wird von zwei Positionssensoren 20.1, 20.2 abgetastet. Deren Teilmesssignale M1, M2 sind der Verarbeitungseinheit 30 zugeführt und werden zu Positionssignalen P verarbeitet. Durch die Abtastung der Messteilung 14 an verschiedenen Stellen des Umfangs (im Beispiel versetzt um 180°) können Messfehler, die aus Exzentrizitäts- und Taumelbewegungen des Teilungsträgers 12 resultieren, korrigiert werden.

Neben dieser an sich bekannten Vorgehensweise zur Korrektur der Positionssignale P sind die Teilmesssignale M1, M2 auch einer Vorverarbeitungseinheit 25 zugeführt, die die Teilmesssignale M1, M2 zu einem Messsignal M verarbeitet. Mit Vorteil bildet die Vorverarbeitungseinheit 25 hierzu ein Differenzsignal der Teilmesssignale M1, M2, das ein Maß für die Exzentrizitäts- und/oder Taumelbewegungen des Teilungsträgers 12 ist. Die Positionssensoren 20.1, 20.2 bilden auf diese Weise in Verbindung mit der Vorverarbeitungseinheit 25 einen erfindungsgemäßen Bewegungssensor.

Es können auch mehr als zwei Positionssensoren zum Einsatz kommen, die mit Vorteil in gleichmäßigen Abständen um den Umfang des Teilungsträgers 12 angeordnet sind. Insbesondere bei Teilungsträgern mit großen Durchmessern können die Positionssensoren 20.1, 20.2 in separaten Gehäusen angeordnet sein.

Zur Auswertung der Messsignale M können Signalanalyseeinheiten 50 nach den Figuren 3 oder 7 zum Einsatz kommen. Gegebenenfalls können in der Signalanalyseeinheit 50 auch in diesem Ausführungsbeispiel mehrere Auswerteverfahren zur Verfügung stehen, die über Parameter PAR auswählbar sind.

Dieses Ausführungsbeispiel ermöglicht eine detaillierte Analyse von Exzentrizitäts- und/oder Taumelbewegungen des Teilungsträgers 12, aus der wiederum Rückschlüsse auf die Lagerung einer Welle, deren Drehbewegung von der Positionsmesseinrichtung 10 gemessen wird, sowie auf den Anbau der Positionsmesseinrichtung 10 an diese Welle gezogen werden können. Eine Kombination mit Gestaltungsmerkmalen der Ausführungsbeispiele nach den Figuren 1, 7 und 8 ist möglich.

Die vorliegende Erfindung ist selbstverständlich nicht auf die beschriebenen Ausführungsbeispiele beschränkt, sondern kann von einem Fachmann im Rahmen der Ansprüche alternativ ausgestaltet werden. Insbesondere können Signalanalyseeinheiten 50 basierend auf alternativen Auswerteverfahren zum Einsatz kommen, die zusätzliche oder alternative Parameter erfordern, als die anhand der obigen Ausführungsbeispiele vorgestellten Parameter.

## Patentansprüche

1. Positionsmesseinrichtung mit
• einem Teilungsträger (12), auf dem eine Messteilung (14) angeordnet ist,
• wenigstens einem Positionssensor (20), eingerichtet zum Generieren positionsabhängiger Messsignale (M, MP) durch Abtastung der Messteilung (14),
• einer Verarbeitungseinheit (30), eingerichtet zur Verarbeitung der positionsabhängigen Messsignale (M, MP) zu Positionssignalen (P), und
• einer Schnittstelleneinheit (40) zur Übertragung der Positionssignale (P) zu einer Folgeelektronik (80) über wenigstens einen Datenübertragungskanal (44, 46),
wobei die Positionsmesseinrichtung (10) wenigstens einen Bewegungssensor (20, 120, 220) umfasst, der zeitlich veränderliche Messsignale (M, MP, MX, MY, MZ) generiert, **dadurch gekennzeichnet, dass** die Positionsmesseinrichtung (10) eine Signalanalyseeinheit (50) umfasst, der die zeitlich veränderlichen Messsignale (M, MP, MX, MY, MZ) zugeführt sind,
dass die Signalanalyseeinheit (50) zur Auswertung der zeitlich veränderlichen Messsignale (M, MP, MX, MY, MZ) im Frequenzbereich eingerichtet ist und diese Auswertung von Parametern (PAR) abhängig ist, und
dass die Schnittstelleneinheit (40) dazu eingerichtet ist, die Parameter (PAR) von der Folgeelektronik (80) zu empfangen und Ergebnisdaten (ED), die aus der Auswertung der zeitlich veränderlichen Messsignale (M, MP, MX, MY, MZ) resultieren, zur Folgeelektronik (80) zu übertragen.

2. Positionsmesseinrichtung nach Anspruch 1, wobei wenigstens ein Bewegungssensor (20, 120, 220) ein Positionssensor (20) ist.

3. Positionsmesseinrichtung nach Anspruch 1, wobei wenigstens ein Bewegungssensor (20, 120, 220) aus wenigstens zwei Positionssensoren (20.1, 20.2), die durch Abtastung der Messteilung (14) Teilmesssignale (M1, M2) generieren und einer Vorverarbeitungseinheit (25), die die Teilmesssignale (M1, M2) zum Messsignal (M) verarbeitet, gebildet ist.

4. Positionsmesseinrichtung nach einem der vorhergehenden Ansprüche, wobei wenigstens ein Bewegungssensor (20, 120, 220) ein Beschleunigungssensor oder ein Körperschallsensor ist.

5. Positionsmesseinrichtung nach einem der vorhergehenden Ansprüche, wobei die Signalanalyseeinheit (50) einen Parameterspeicher (56) aufweist, in dem Parameter (PAR) speicherbar sind.

6. Positionsmesseinrichtung nach einem der vorhergehenden Ansprüche, wobei die Signalanalyseeinheit (50) eine Signalerfassungseinheit (52) zur Erfassung von Messwerten der Messsignale (M, MP, MX, MY, MZ) des wenigstens einen Bewegungssensors (20, 120, 220) aufweist, sowie eine Recheneinheit (58) zur Berechnung von Ergebnisdaten (ED), wobei die Ergebnisdaten (ED) von den Parametern (PAR) abhängig sind.

7. Positionsmesseinrichtung nach Anspruch 6, wobei die Recheneinheit für (58) eine Frequenzanalyse der Messwerte eingerichtet ist.

8. Positionsmesseinrichtung nach Anspruch 6, wobei der Signalanalyseeinheit (50) ein Hilfssignal (H) zugeführt ist, das ein Drehzahlsignal ist, und die Recheneinheit (58) für eine Ordnungsanalyse der Messwerte eingerichtet ist.

9. Positionsmesseinrichtung nach Anspruch 6, wobei die Recheneinheit (58) ein programmierbares Filter (59) zur Filterung der Messwerte, sowie eine RMS-Berechnungseinheit (60) zur Berechnung eines Effektivwertes aus den gefilterten Messwerten aufweist.

10. Positionsmesseinrichtung nach einem der vorhergehenden Ansprüche, wobei der wenigstens eine Bewegungssensor (20, 120, 220) mechanisch mit einer Komponente der Positionsmesseinrichtung (10) verbunden ist.

11. Verfahren zum Betreiben einer Positionsmesseinrichtung nach einem der Ansprüche 1 bis 10, mit folgenden Schritten:
• Übertragung von Parametern (PAR) von der Folgeelektronik (80) zur Positionsmesseinrichtung (10),
• Bestimmung von Ergebnisdaten (ED) in der Signalanalyseeinheit (50) durch Auswertung der Messsignale (M, MP, MX, MY, MZ) im Frequenzbereich unter Berücksichtigung der Parameter (PAR) und
• Übertragung der Ergebnisdaten (ED) zur Folgeelektronik (80).

12. Verfahren nach Anspruch 11, wobei die Parameter (PAR) Auswerteparameter umfassen.

13. Verfahren nach Anspruch 12, wobei die Parameter (PAR) wenigstens einen der folgenden Auswerteparameter umfassen:
• ein Frequenzband (fu, fo),
• einen Ordnungsbereich (Ou, Oo),
• eine Grenzamplitude (AG),
• eine Anzahl (N) von Ergebnisfrequenzen
• ein Auswerteverfahren,
• die Filterfunktion eines programmierbaren Filters (59).

14. Verfahren nach einem der Ansprüche 11 bis 13, wobei die Parameter (PAR) Ausführungsparameter umfassen.

15. Verfahren nach Anspruch 14, wobei die Parameter (PAR) wenigstens einen der folgenden Ausführungsparameter umfassen:
• einen unbedingten Startbefehl für die Auswertung der Messsignale (M, MP, MX, MY, MZ),
• einen bedingten Startbefehl für die Auswertung der Messsignale (M, MP, MX, MY, MZ),
• einen Befehl zur einmaligen Auswertung der Messsignale (M, MP, MX, MY, MZ),
• einen Befehl zu einer kontinuierlichen Auswertung der Messsignale (M, MP, MX, MY, MZ),
• einen Anhaltebefehl zur Beendung der Auswertung der Messsignale (M, MP, MX, MY, MZ).

## Claims

1. Position measuring device having
• a graduation carrier (12) on which a measuring graduation (14) is arranged,
• at least one position sensor (20) configured to generate position-dependent measurement signals (M, MP) by scanning the measuring graduation (14),
• a processing unit (30) configured to process the position-dependent measurement signals (M, MP) to form position signals (P), and
• an interface unit (40) for transmitting the position signals (P) to downstream electronics (80) via at least one data transmission channel (44, 46),
wherein the position measuring device (10) comprises at least one motion sensor (20, 120, 220) which generates temporally variable measurement signals (M, MP, MX, MY, MZ), **characterized in that** the position measuring device (10) comprises a signal analysis unit (50) which is supplied with the temporally variable measurement signals (M, MP, MX, MY, MZ), **in that** the signal analysis unit (50) is configured to evaluate the temporally variable measurement signals (M, MP, MX, MY, MZ) in the frequency domain and this evaluation is dependent on parameters (PAR), and **in that** the interface unit (40) is configured to receive the parameters (PAR) from the downstream electronics (80) and to transmit result data (ED), which result from the evaluation of the temporally variable measurement signals (M, MP, MX, MY, MZ), to the downstream electronics (80).

2. Position measuring device according to Claim 1, wherein at least one motion sensor (20, 120, 220) is a position sensor (20).

3. Position measuring device according to Claim 1, wherein at least one motion sensor (20, 120, 220) is formed from at least two position sensors (20.1, 20.2), which generate partial measurement signals (M1, M2) by scanning the measuring graduation (14), and a pre-processing unit (25) which processes the partial measurement signals (M1, M2) to form the measurement signal (M).

4. Position measuring device according to one of the preceding claims, wherein at least one motion sensor (20, 120, 220) is an acceleration sensor or a structure-borne sound sensor.

5. Position measuring device according to one of the preceding claims, wherein the signal analysis unit (50) has a parameter memory (56) in which parameters (PAR) can be stored.

6. Position measuring device according to one of the preceding claims, wherein the signal analysis unit (50) has a signal capture unit (52) for capturing measured values of the measurement signals (M, MP, MX, MY, MZ) from the at least one motion sensor (20, 120, 220) and a computing unit (58) for calculating result data (ED), wherein the result data (ED) are dependent on the parameters (PAR).

7. Position measuring device according to Claim 6, wherein the computing unit (58) is configured for a frequency analysis of the measured values.

8. Position measuring device according to Claim 6, wherein an auxiliary signal (H) which is a speed signal is supplied to the signal analysis unit (50), and the computing unit (58) is configured for an order analysis of the measured values.

9. Position measuring device according to Claim 6, wherein the computing unit (58) has a programmable filter (59) for filtering the measured values and an RMS calculation unit (60) for calculating a root mean square value from the filtered measured values.

10. Position measuring device according to one of the preceding claims, wherein the at least one motion sensor (20, 120, 220) is mechanically connected to a component of the position measuring device (10).

11. Method for operating a position measuring device according to one of Claims 1 to 10, having the following steps of:
• transmitting parameters (PAR) from the downstream electronics (80) to the position measuring device (10),
• determining result data (ED) in the signal analysis unit (50) by evaluating the measurement signals (M, MP, MX, MY, MZ) in the frequency domain taking the parameters (PAR) into account, and
• transmitting the result data (ED) to the downstream electronics (80).

12. Method according to Claim 11, wherein the parameters (PAR) comprise evaluation parameters.

13. Method according to Claim 12, wherein the parameters (PAR) comprise at least one of the following evaluation parameters:
• a frequency band (fu, fo),
• an order range (Ou, Oo),
• a limit amplitude (AG),
• a number (N) of result frequencies,
• an evaluation method,
• the filter function of a programmable filter (59) .

14. Method according to one of Claims 11 to 13, wherein the parameters (PAR) comprise execution parameters.

15. Method according to Claim 14, wherein the parameters (PAR) comprise at least one of the following execution parameters:
• an unconditional starting command for evaluating the measurement signals (M, MP, MX, MY, MZ),
• a conditional starting command for evaluating the measurement signals (M, MP, MX, MY, MZ),
• a command for evaluating the measurement signals (M, MP, MX, MY, MZ) once,
• a command for continuously evaluating the measurement signals (M, MP, MX, MY, MZ),
• a stopping command for ending the evaluation of the measurement signals (M, MP, MX, MY, MZ).

## Revendications

1. Dispositif de mesure de position, comprenant
• un support de graduation (12) sur lequel est disposée une graduation de mesure (14),
• au moins un capteur de position (20), conçu pour générer des signaux de mesure (M, MP) dépendants de la position par le balayage de la graduation de mesure (14),
• une unité de transformation (30), conçue pour transformer les signaux de mesure (M, MP) dépendants de la position en signaux de position (P), et
• une unité d'interface (40) pour transmettre les signaux de position (P) à une électronique de poursuite (80) sur au moins un canal de transmission de données (44, 46),
le dispositif de mesure de position (10) comprenant au moins un capteur de mouvement (20, 120, 220) qui génère des signaux de mesure (M, MP, MX, MY, MZ) variables dans le temps,
**caractérisé**
**en ce que** le dispositif de mesure de position (10) comprend une unité d'analyse de signal (50) alimentée par les signaux de mesure (M, MP, MX, MY, MZ) variables dans le temps,
**en ce que** l'unité d'analyse de signal (50) est conçue pour évaluer les signaux de mesure (M, MP, MX, MY, MZ) variables dans le temps dans le domaine fréquentiel, et cette évaluation dépend de certains paramètres (PAR), et
**en ce que** l'unité d'interface (40) est conçue pour recevoir les paramètres (PAR) de l'électronique de poursuite (80) et pour transmettre à l'électronique de poursuite (80) des données de résultat (ED) qui résultent de l'évaluation des signaux de mesure (M, MP, MX, MY, MZ) variables dans le temps.

2. Dispositif de mesure de position selon la revendication 1, dans lequel au moins un capteur de mouvement (20, 120, 220) est un capteur de position (20) .

3. Dispositif de mesure de position selon la revendication 1, dans lequel au moins un capteur de mouvement (20, 120, 220) est formé par au moins deux capteurs de position (20.1, 20.2) qui génèrent des signaux de mesure partiels (M1, M2) par le balayage de la graduation de mesure (14) et une unité de prétraitement (25) qui transforme les signaux de mesure partiels (M1, M2) en un signal de mesure (M).

4. Dispositif de mesure de position selon l'une quelconque des revendications précédentes, dans lequel au moins un capteur de mouvement (20, 120, 220) est un capteur d'accélération ou un capteur de bruit de structure.

5. Dispositif de mesure de position selon l'une quelconque des revendications précédentes, dans lequel l'unité d'analyse de signal (50) présente une mémoire de paramètres (56) permettant de mémoriser des paramètres (PAR).

6. Dispositif de mesure de position selon l'une quelconque des revendications précédentes, dans lequel l'unité d'analyse de signal (50) présente une unité de détection de signal (52) pour détecter des valeurs de mesure des signaux de mesure (M, MP, MX, MY, MZ) dudit au moins un capteur de mouvement (20, 120, 220) ainsi qu'une unité de calcul (58) pour calculer des données de résultat (ED), les données de résultat (ED) dépendant des paramètres (PAR).

7. Dispositif de mesure de position selon la revendication 6, dans lequel l'unité de calcul (58) est conçue pour une analyse de fréquence des valeurs de mesure.

8. Dispositif de mesure de position selon la revendication 6, dans lequel l'unité d'analyse de signal (50) est alimentée par un signal auxiliaire (H) qui est un signal de vitesse de rotation, et l'unité de calcul (58) est conçue pour une analyse d'ordre des valeurs de mesure.

9. Dispositif de mesure de position selon la revendication 6, dans lequel l'unité de calcul (58) présente un filtre programmable (59) pour filtrer les valeurs de mesure ainsi qu'une unité de calcul de RMS (60) pour calculer une valeur efficace à partir des valeurs filtrées.

10. Dispositif de mesure de position selon l'une quelconque des revendications précédentes, dans lequel ledit au moins un capteur de mouvement (20, 120, 220) est relié mécaniquement à un composant du dispositif de mesure de position (10).

11. Procédé d'exploitation d'un dispositif de mesure de position selon l'une quelconque des revendications 1 à 10, comprenant les étapes suivantes consistant à :
• transmettre des paramètres (PAR) de l'électronique de poursuite (80) au dispositif de mesure de position (10),
• déterminer des données de résultat (ED) dans l'unité d'analyse de signal (50) par l'évaluation des signaux de mesure (M, MP, MX, MY, MZ) dans la plage de fréquence en tenant compte des paramètres (PAR), et
• transmettre les données de résultat (ED) à l'électronique de poursuite (80).

12. Procédé selon la revendication 11, dans lequel les paramètres (PAR) comprennent des paramètres d'évaluation.

13. Procédé selon la revendication 12, dans lequel les paramètres (PAR) comprennent au moins l'un des paramètres d'évaluation suivants :
• une bande de fréquence (fu, fo),
• une plage d'ordre (Ou, Oo),
• une amplitude limite (AG),
• un nombre (N) de fréquences de résultat,
• un procédé d'évaluation,
• la fonction de filtrage d'un filtre programmable (59).

14. Procédé selon l'une quelconque des revendications 11 à 13, dans lequel les paramètres (PAR) comprennent des paramètres d'exécution.

15. Procédé selon la revendication 14, dans lequel les paramètres (PAR) comprennent au moins l'un des paramètres d'exécution suivants :
• une commande de démarrage inconditionnelle pour l'évaluation des signaux de mesure (M, MP, MX, MY, MZ),
• une commande de démarrage conditionnelle pour l'évaluation des signaux de mesure (M, MP, MX, MY, MZ),
• une commande pour une évaluation unique des signaux de mesure (M, MP, MX, MY, MZ),
• une commande pour une évaluation continue des signaux de mesure (M, MP, MX, MY, MZ),
• une commande d'arrêt pour terminer l'évaluation des signaux de mesure (M, MP, MX, MY, MZ).
